(19) Europäisches Patentamt
European Patent Office
Office européen des brevets

(11) **EP 4 346 214 A1**

(12) **EUROPEAN PATENT APPLICATION**

(43) Date of publication:
**03.04.2024 Bulletin 2024/14**

(21) Application number: **23150304.6**

(22) Date of filing: **04.01.2023**

(51) International Patent Classification (IPC):
**H04N 19/597** *(2014.01)*    **H04N 19/117** *(2014.01)*
**H04N 19/70** *(2014.01)*    **G06T 9/00** *(2006.01)*

(52) Cooperative Patent Classification (CPC):
**H04N 19/597; G06T 9/001; H04N 19/117;
H04N 19/70**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **27.09.2022 JP 2022153693**
           **27.09.2022 JP 2022153694**

(71) Applicant: **SHARP Kabushiki Kaisha**
**Sakai-City, Osaka 590-8522 (JP)**

(72) Inventors:
• **TAKADA, Keiichiro**
 **Sakai City, Osaka 590-8522 (JP)**
• **TOKUMO, Yasuaki**
 **Sakai City, Osaka 590-8522 (JP)**
• **IKAI, Tomohiro**
 **Sakai City, Osaka 590-8522 (JP)**
• **CHUJOH, Takeshi**
 **Sakai City, Osaka 590-8522 (JP)**
• **AONO, Tomoko**
 **Sakai City, Osaka 590-8522 (JP)**

(74) Representative: **Müller Hoffmann & Partner**
**Patentanwälte mbB**
**St.-Martin-Straße 58**
**81541 München (DE)**

(54) **3D DATA CODING APPARATUS AND 3D DATA DECODING APPARATUS**

(57)     Object

The mere use of supplemental enhancement information of a deep learning post-filter degrades the performance of improving image quality because filter strength fails to be adjusted in a case that features of an image vary with frame.

Solution

Provided is a 3D data decoding apparatus for decoding coded data into 3D data including location information and attribute information, the decoding apparatus including a header decoder configured to decode the coded data into supplemental enhancement information of a deep learning post-filter, an attribute image decoder configured to decode the coded data into an attribute image, and an attribute image filter unit configured to perform filtering processing on the attribute image, wherein the header decoder performs decoding into purpose information indicating that the attribute image filter unit performs the filtering processing on the attribute image.

FIG. 6

**Description**

Technical Field

Embodiments of the present invention relate to a 3D data coding apparatus and a 3D data decoding apparatus.

Background Art

For efficient transmission or recording of 3D data, 3D data coding apparatuses are available that project the 3D data into a two-dimensional image and code the image by a video coding scheme to generate coded data and 3D data decoding apparatuses are available that decode the coded data to a two-dimensional image and reconstruct the image to generate 3D data. Techniques are also available that perform filtering processing on a two-dimensional image by using supplemental enhancement information of a deep learning post-filter.

Specific 3D data coding schemes include, for example, Volumetric Video-based Coding (MPEG-I V3C) and Video-Based Point Cloud Configuration (V-PCC) (NPL 1). V3C enables coding and decoding of multi-view videos in addition to point clouds including locations of points and attribute information. Existing video coding schemes include, for example, H.266/VVC, H.265/HEVC, and the like. Furthermore, Supplemental Enhancement Information (SEI) is available that is used to transmit image feature, a display method and timing simultaneously with coded data, and supplemental enhancement information of a deep learning post-filter has also been disclosed (NPL 2).

Citation List

Non Patent Literature

NPL 1
ISO/IEC 23090-5
NPL 2
"Additional SEI messages for VSEI (Draft 2)", Joint Video Experts Team (JVET) of ITU-T SG 16 WP 3 and ISO/IEC JTC 1/SC 29, JVET-AA2006, 2022

Summary of Invention

Technical Problem

In the 3D data coding scheme in NPL 1, attributes (color images) constituting 3D data are coded and decoded using a video coding scheme such as HEVC or VVC. However, a problem with NPL 1 is that distortion of the color images caused by the coding degrades the accuracy and quality of the 3D data to be reconstructed. A problem with NPL 2 is that the mere use of the supplemental enhancement information of the deep learning post-filter in PTL 2 degrades the improvement of image quality because filter strength fails to be sufficiently adjusted in a case that features of the image vary from attribute image to attribute image or from frame to frame.

An object of the present invention is to reduce, in coding and decoding of 3D data using a video coding scheme, coding distortion to allow 3D data to be coded and decoded while achieving high quality.

Solution to Problem

In order to solve the problem described above, an aspect of the present invention provides 3D data decoding apparatus configured to decode coded data into 3D data including location information and attribute information, the decoding apparatus including a header decoder configured to decode the coded data into supplemental enhancement information of a deep learning post-filter, an attribute image decoder configured to decode the coded data into an attribute image, and an attribute image filter unit configured to perform filtering processing on the attribute image, wherein the header decoder performs decoding into purpose information indicating that the attribute image filter unit performs the filtering processing on the attribute image.

In order to solve the above problems, an aspect of the present invention provides a 3D data coding apparatus for coding 3D data, the 3D data coding apparatus including a multiplexing unit configured to code supplemental enhancement information of a deep learning post-filter, an attribute image filter parameter derivation unit configured to derive a filter parameter of an attribute image of the 3D data, and an attribute image coder configured to code the attribute image.

Advantageous Effects of Invention

According to an aspect of the present invention, distortion caused by coding of a color image can be reduced, allowing 3D data to be coded and decoded with high quality.

Brief Description of Drawings

FIG. 1 is a schematic diagram illustrating a configuration of a 3D data transmission system according to the present embodiment.
FIG. 2 is a diagram illustrating a hierarchical structure of data of a coding stream.
FIG. 3 is a diagram for describing 3D data, an occupancy map, a geometry image, and an attribute image.
FIG. 4 is a diagram for describing a layer structure of the geometry image and the attribute image.
FIG. 5 is a diagram for describing a process for converting one-channel image into a four-channel image.
FIG. 6 is a functional block diagram illustrating a general configuration of a 3D data decoding apparatus 31 according to a first embodiment.
FIG. 7 is a functional block diagram illustrating a configuration of an attribute image filter unit 308 in the 3D data decoding apparatus 31.
FIG. 8 is a functional block diagram illustrating a configuration of the attribute image filter unit 308 in the 3D data decoding apparatus 31.
FIG. 9 is a functional block diagram illustrating a configuration of the attribute image filter unit 308 in the 3D data decoding apparatus 31.
FIG. 10 is a functional block diagram illustrating a general configuration of a 3D data coding apparatus 11 according to the first embodiment.
FIG. 11 is a flowchart illustrating decoding processing for SEI.
FIG. 12 illustrates an example of a syntax for a neural-network post-filter characteristics SEI message.
FIG. 13 illustrates an example of a syntax for a configuration in which filter parameters are transmitted in a neural-network post-filter activation SEI message.
FIG. 14 is an example of a syntax for a configuration in which the filter parameters are transmitted in the neural-network post-filter activation SEI message.
FIG. 15 is an example of a syntax for a configuration in which the filter parameters are transmitted in the neural-network post-filter activation SEI message.

Description of Embodiments

Hereinafter, an embodiment of the present invention will be described with reference to the drawings.

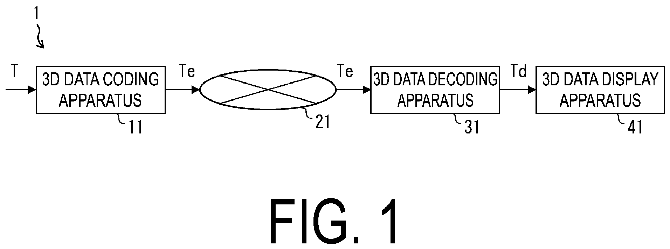

FIG. 1 is a schematic diagram illustrating a configuration of a 3D data transmission system 1 according to the present embodiment.

The 3D data transmission system 1 is a system that transmits a coding stream obtained by coding a coding target 3D data, decodes the transmitted coding stream, and displays 3D data. The 3D data transmission system 1 includes a 3D data coding apparatus 11, a network 21, a 3D data decoding apparatus 31. and a 3D data display apparatus 41.

3D data T is input to the 3D data coding apparatus 11.

The network 21 transmits a coding stream Te generated by the 3D data coding apparatus 11 to the 3D data decoding apparatus 31. The network 21 is the Internet, a Wide Area Network (WAN), a Local Area Network (LAN), or a combination thereof. The network 21 is not necessarily limited to a bidirectional communication network, and may be a unidirectional communication network configured to transmit broadcast waves of digital terrestrial television broadcasting, satellite broadcasting of the like. The network 21 may be substituted by a storage medium in which the coding stream Te is recorded, such as a Digital Versatile Disc (DVD: trade name) or a Blue-ray Disc (BD: trade name).

The 3D data decoding apparatus 31 decodes each of the coding streams Te transmitted from the network 21 and generates one or multiple decoded 3D data Td.

The 3D data display apparatus 41 displays all or part of the one or multiple decoded 3D data Td generated by the 3D data decoding apparatus 31. For example, the 3D data display apparatus 41 includes a display device such as a liquid crystal display and an organic Electro-Luminescence (EL) display. Forms of the display include a stationary type, a mobile type, an HMD type, and the like. The 3D data decoding apparatus 31 displays an image with high image quality in a case of having a high processing capability, and displays an image not requiring high processing capability or display capability in a case of having a lower processing capability.

Structure of Coding Stream Te

A data structure of the coding stream Te generated by the 3D data coding apparatus 11 and decoded by the 3D data decoding apparatus 31 will be described.

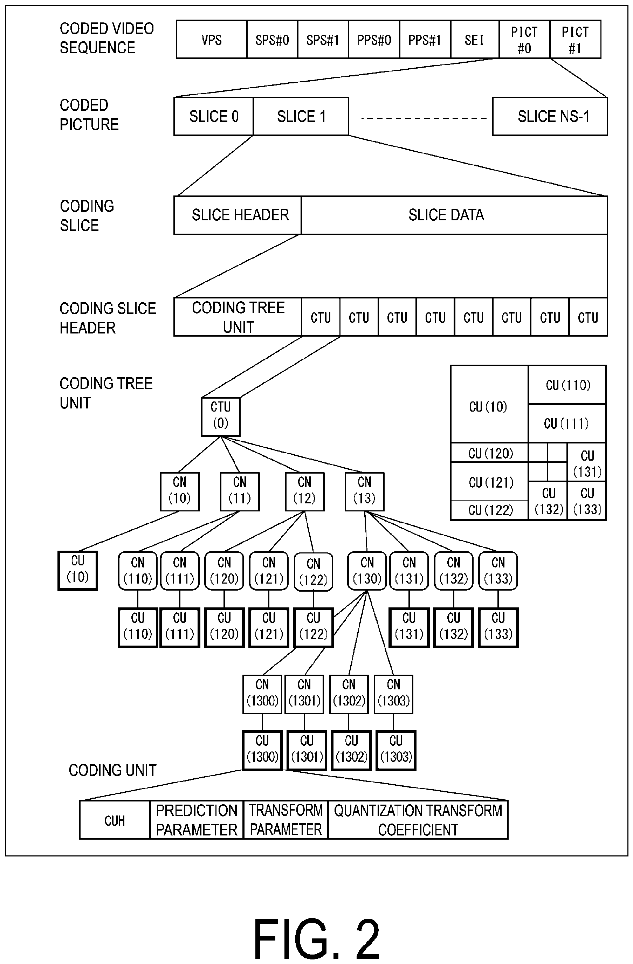

FIG. 2 is a diagram illustrating the hierarchy structure of data in the coding stream Te. The coding stream Te includes a sequence and multiple pictures constituting the sequence illustratively. FIG. 2 is a diagram illustrating a coded video sequence defining a sequence SEQ, a coded picture prescribing a picture PICT, a coding slice prescribing a slice S, a coding slice data prescribing slice data, a coding tree unit included in the coding slice data, and a coding unit included in the coding tree unit.

Coded Video Sequence

In the coded video sequence, a set of data referenced by the 3D data decoding apparatus 31 to decode the sequence SEQ to be processed is defined. As illustrated in the coded video sequence of FIG. 2, the sequence SEQ includes a Video Parameter Set, a Sequence Parameter Set (SPS), a Picture Parameter Set (PPS), a picture PICT, and Supplemental Enhancement Information SEI. Note that the three-dimensional data may include yet another set of parameters.

In the video parameter set VPS, in a video including multiple layers, a set of coding parameters common to multiple videos and a set of coding parameters associated with the multiple layers and an individual layer included in the video are defined.

In the sequence parameter set SPS, a set of coding parameters referenced by the 3D data decoding apparatus 31 to decode a target sequence is defined. For example, a width and a height of a picture are defined. Note that multiple SPSs may exist. In that case, any of the multiple SPSs is selected from the PPS.

In the picture parameter set PPS, a set of coding parameters referenced by the video decoding apparatus 31 to decode each picture in a target sequence is defined. For example, a reference value (pic_init qp_minus26) of a quantization step size used for decoding of a picture and a flag (weighted_pred_flag) indicating an application of a weight prediction are included. Note that multiple PPSs may exist. In that case, any of the multiple PPSs is selected from each picture in a target sequence.

Coded Picture

In the coded picture, a set of data referenced by the 3D data decoding apparatus 31 to decode the picture PICT to be processed is defined. As illustrated in the coded picture of FIG. 2, the picture PICT includes slices 0 to NS-1 (NS is the total number of slices included in the picture PICT).

Coding Slice

In the coding slice, a set of data referenced by the 3D data decoding apparatus 31 to decode the slice S to be processed is defined. As illustrated in the coding slice of FIG. 2, the slice includes a slice header and slice data.

The slice header includes a coding parameter group referenced by the 3D data decoding apparatus 31 to determine a decoding method for a target slice. Slice type indication information (slice_type) indicating a slice type is one example of a coding parameter included in the slice header.

Examples of slice types that can be specified by the slice type specification information include (1) I slice using only an intra prediction in coding, (2) P slice using a unidirectional prediction or an intra prediction in coding, and (3) B slice using a unidirectional prediction, a bidirectional prediction, or an intra prediction in coding, and the like. Note that the inter prediction is not limited to a uni-prediction and a bi-prediction, and the prediction image may be generated by using a larger number of reference pictures. Hereinafter, in a case of being referred to as the P or B slice, a slice that includes a block in which the inter prediction can be used is indicated.

Coding Slice Data

In the coding slice data, a set of data referenced by the 3D data decoding apparatus 31 to decode the slice data to be processed is defined. The slice data includes CTUs as illustrated in the coding slice header in FIG. 2. The CTU is a block of a fixed size (for example, 64 × 64) constituting a slice, and may also be called a Largest Coding Unit (LCU).

Coding Tree Unit

In the coding tree unit of FIG. 2, a set of data is defined that is referenced by the 3D data decoding apparatus 31 to decode the CTU to be processed. The CTU is split into coding unit CUs, each of which is a basic unit of coding processing, by a recursive Quad Tree split (QT split), Binary Tree split (BT split), or Ternary Tree split (TT split).

Coding Unit

As illustrated in the coding unit of FIG. 2, a set of data referenced by the 3D data decoding apparatus 31 to decode the coding unit to be processed is defined. Specifically, the CU includes a CU header CUH, a prediction parameter, a transform parameter, a quantization transform coefficient, and the like. In the CU header, a prediction mode and the like are defined.

There are two types of predictions (prediction modes), which are intra prediction and inter prediction. The intra prediction refers to a prediction in an identical picture, and the inter prediction refers to prediction processing performed between different pictures (for example, between pictures of different display times, and between pictures of different layer images).

Transform and quantization processing is performed on a per CU basis, but the quantization transform coefficient may be subjected to entropy coding on a per subblock basis such as $4 \times 4$.

Prediction Parameter

A prediction image is derived by prediction parameters accompanying a block. The prediction parameters include prediction parameters for intra prediction and inter prediction.

Data Structure of Three-dimensional Volumetric Information

Three-dimensional volumetric information (3D data) herein is a set of location information (x, y, z) and attribute information on a three-dimensional space. For example, the 3D data is expressed in a point cloud format corresponding to a group of points for location information and attribute information on the three-dimensional space, or a mesh (or polygon) format including vertexes of triangles and surfaces.

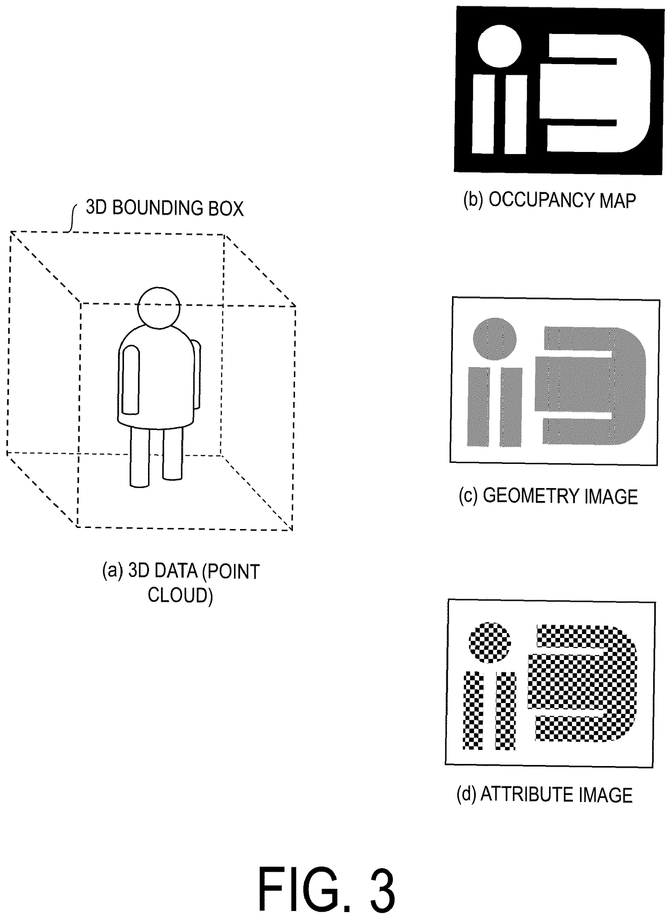

FIG. 3 is a diagram for describing 3D data, an occupancy map, a geometry image (location information), an attribute image. The point cloud and mesh constituting the 3D data are divided into multiple portions (regions) by the 3D data coding apparatus 11, and a group of points included in each portion is projected on any of the planes of the 3D bounding box (FIG. 3(a)) set on the 3D space. The 3D data coding apparatus 11 generates multiple patches from the projected group of points. The following is referred to as atlas information: information related to the 3D bounding box (such as coordinates and sizes), and information related to mapping to projection planes (projection plane of each patch, coordinates, sizes, presence or absence of rotation, etc.). The occupancy map is an image depicting a valid region (region in which a point cloud or a mesh is present) of each patch as a 2D binary image (e.g., a valid region is represented as 1, and invalid region is represented as 0) (FIG. 3(b)). Note that for the valid region and the invalid region, values other than 0 and 1, such as 255 and 0 may be used. The geometry image is an image indicating a depth value (distance) relative to the projection plane of each patch (FIG. 3(c)). The relationship between the depth value and the pixel value may be linear, or a distance may be derived from the pixel value by using a look-up table or mathematical formula, or a relationship expression including a combination of branches based on values. The attribute image is an image that indicates an attribute of the point (e.g., an RGB color). Note that the occupancy map image, geometry image, attribute image, and atlas information may be obtained by mapping (combining), onto a two-dimensional image, partial images (patches) from different projection planes. The atlas information includes the number of patches and information of the projection planes corresponding to the patches. The 3D data decoding apparatus 12 reconstructs the coordinates and attribute information of the group of points or the mesh from the atlas information, the occupancy map, the geometry image, or the attribute image. Here, the point is each point of the point cloud or a vertex of the mesh. Note that instead of the occupancy map image or the geometry image, mesh information (location information) indicating the vertexes of the mesh may be coded, decoded, and transmitted. The mesh information may also be divided, coded, and transmitted by being divided into a base mesh constituting a basic mesh corresponding to a subset of the mesh, and mesh displacements from the base mesh for indicating meshes other than the base mesh.

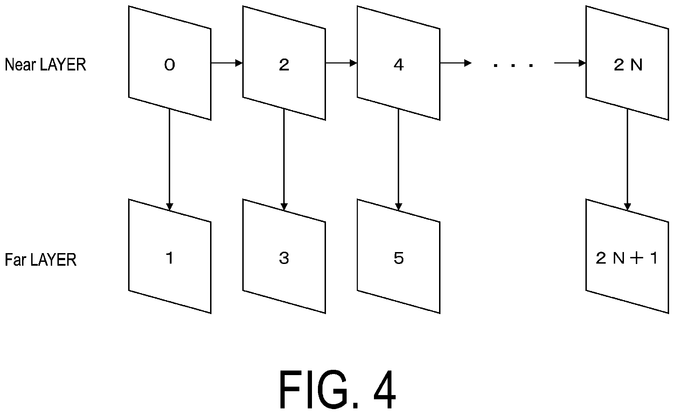

FIG. 4 is a diagram for describing a layer structure of the geometry image and the attribute image. The geometry image or the attribute image may include multiple images (layers). For example, the image may include Near layers and Far layers. Here, the Near layer and the Far layer are videos constituting geometries and attributes having different depths as viewed from a certain projection plane. The Near layer may be a set of points each having the minimum depth relative to a respective pixel of the projection plane. The Far layer may be a set of points each having the maximum depth relative to a respective pixel of the projection plane within a prescribed range (e.g., in the range of a distance d from the Near layer).

A geometry image coder 106 described below may code a Near layer geometry image into an intra-picture (I picture) and code a Far layer geometry image into an inter-picture (P picture or B picture). The Near layer and the Far layer may be coded using LayerID (nuh layer id syntax) in a Network Abstract Layer (NAL) unit in such a manner that the Near and Far layers can be identified on a bit stream; the Near and Far layers may respectively be coded into LayerID = 0 and LayerID = 1. Alternatively, the Near layer and the Far layer may be coded using TemporalID in the NAL unit in such a manner that the Near and Far layers can be identified on the bit stream; the Near and Far layers may respectively be coded into TemporalID = 0 and TemporalID = 1.

Convert of 4:2:0 Three-channel Image into Six-Channel Tensor

Convert will be described in which in a 4:2:0 format, a resolution of the luma channel which is different from the chroma channel is made the same as a resolution of the chroma channel. The convert may be considered to be a technique for converting a format in which each of Y, U, and V has one channel (YUV) into a format including four luma channels and in which each of U and V has one channel (YYYYUV).

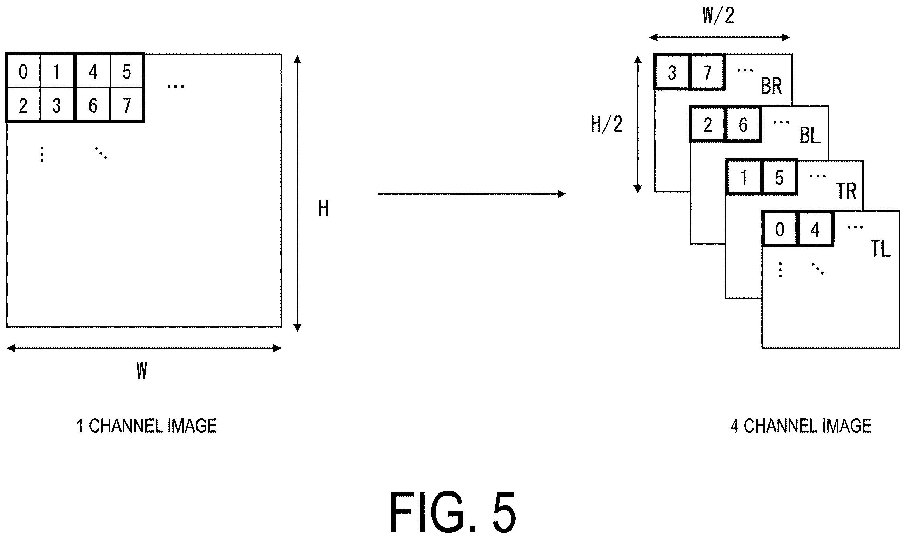

FIG. 5 is a diagram illustrating processing for converting one channel image into a four-channel image. An input image with a width W and a height H is subjected to Z scan in units of 2x2 size, and the resultant pixels are numbered 0, 1, 2, 3, .... This leads to convert into four-channel images with a width W/2 and a height H/2 including a channel of a pixel TL with numbers 4N, a channel of a pixel TR with numbers 4N+1, a channel of a pixel BL with numbers 4N+2, and a channel of a pixel BR with numbers 4N+3.

```
inputTensor[0][y][x] = inSamplesTL = inSamples[0][y * 2 ][x * 2 ]
inputTensor[1][y][x] = inSamplesTR = inSamples[0][y * 2 ][x * 2 + 1 ]
inputTensor[2][y][x] = inSamplesBL = inSamples[0] [y * 2 + 1][x * 2 ]
inputTensor[3][y][x] = inSamplesBR = inSamples[0][y * 2 + 1][x * 2 + 1 ]
```

Alternatively, a three-channel image may be converted into a six-channel image. A 4:2:0 format image inSamples [ch] [y] [x] can be converted into a tensor inputTensor with multiple luma and chroma channels of the same size for processing at a time.

```
inputTensor[0][y][x] = inSamplesTL = inSamples[0][y * 2 ][x * 2 ]
inputTensor[1][y][x] = inSamplesTR = inSamples [0] [y * 2 ][x * 2 + 1]
inputTensor[2][y][x] = inSamplesBL = inSamples[0][y * 2 + 1][x * 2 ]
inputTensor[3][y][x] = inSamplesBR = inSamples[0][y * 2 + 1][x * 2 + 1]
inputTensor[4][y][x] = inSamplesCb = inSamples[1][y ] [x ]
inputTensor[5][y][x] = inSamplesCr = inSamples[2][y ][x ]
```

3D Data Decoding Apparatus according to First Embodiment

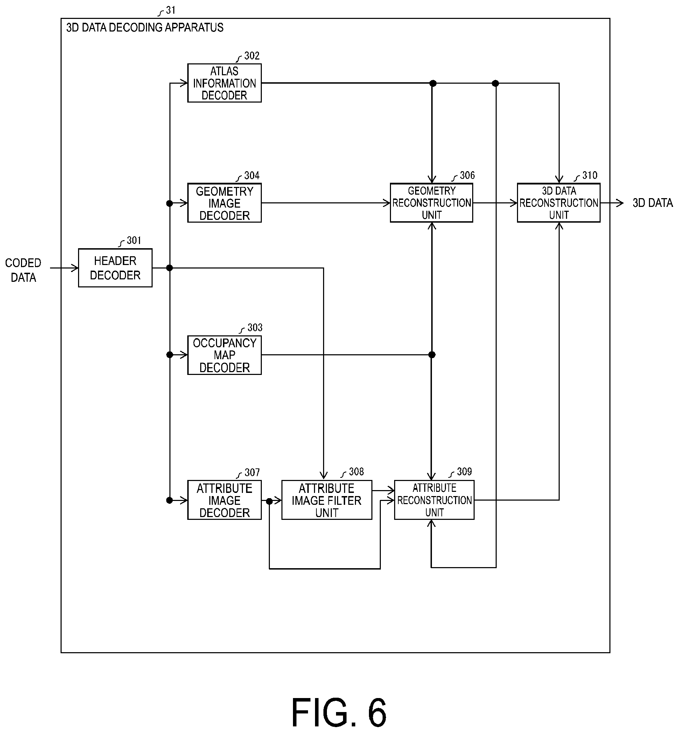

FIG. 6 is a functional block diagram illustrating a general configuration of the 3D data decoding apparatus 31 according to the first embodiment.

The 3D data decoding apparatus 31 includes a header decoder 301, an atlas information decoder 302, an occupancy map decoder 303, a geometry image decoder 304, a geometry reconstruction unit 306, an attribute image decoder 307, an attribute image filter unit 308, an attribute reconstruction unit 309, and a 3D data reconstruction unit 310. Processing of the attribute image filter unit 308 may correspond to a post filter.

The header decoder 301 receives input of coded data obtained by multiplexing in a byte stream format, an ISO Base Medium Format (ISOBMFF), or the like, demultiplexes the coded data, and outputs an atlas information coding stream, an occupancy map coding stream, a geometry image coding stream, an attribute image coding stream, and a filter parameter.

The header decoder 301 decodes the coded data into characteristics SEI and activation SEI. The header decoder 301 performs decoding into neural-network post-filter characteristics SEI (hereinafter referred to as characteristics SEI) indicating the performance of post-filtering processing on a per sequence basis, for example, Coded Video Sequence (CVS) units and into neural-network post-filter activation SEI (activation SEI or application SEI) indicating the activation (application) of post-filtering processing on a per sequence or picture basis, for example, CVS or PictureUnits (PUs). For example, based on nnpfc_id, nnpfc_purpose, nnpfa_atlas_id, and nnpfa_attribute_count, and the like. Header decoder 301 performs decoding into nnpfa_enabled_flag, nnpfa id, and nnpfa_filter_weight on a per attribute image basis. The header decoder 301 may preforms decoding into nnpfa_qp_present_flag, nnpfa_qp_data_format, nnpfa_qp, nnpfa_qp_map_width_minus1, nnpfa_qp_map_height_minus1, and nnpfa_qp_map on a per attribute image basis.

The atlas information decoder 302 receives input of an atlas information coding stream, and decodes the atlas information coding stream into atlas information.

The occupancy map decoder 303 decodes an occupancy map coding stream using VVC or HEVC, and the like, and outputs an occupancy map.

The geometry image decoder 304 decodes a geometry image coding stream using VVC or HEVC, and outputs a geometry image.

The geometry reconstruction unit 306 receives input of atlas information, an occupancy map, and a geometry image, and reconstructs the input data into a geometry (depth information and location information) in the 3D space.

The attribute image decoder 307 decodes a coding stream using VVC, HEVC, or the like, receives input of an attribute coding stream, and outputs an attribute image.

The attribute image filter unit 308 receives input of an attribute image and filter parameters for a specified attribute image. The attribute image filter unit 308 includes a 3D-NN filter unit 611, performs filtering processing based on an attribute image and filter parameters, and outputs a filtering processed image of the attribute image.

The attribute reconstruction unit 309 receives input of atlas information, an occupancy map, and an attribute image, and reconstructs an attribute (color information) in the 3D space.

The 3D data reconstruction unit 310 reconstructs point cloud data or mesh data of 3D data based on the reconstructed geometry information and attribute information. Attribute Image Filter Unit 308

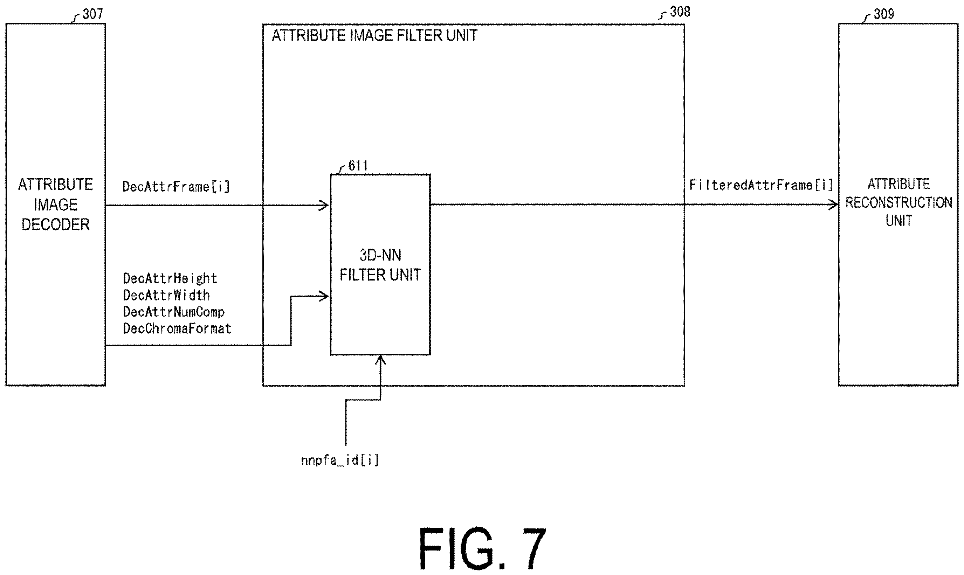

FIG. 7 is a functional block diagram illustrating a configuration of the attribute image filter unit 308. The header decoder 301 decodes coded data of nn_post filter activation (hereinafter referred to as the activation SEI) into nnpfa_atlas_id which is an identifier indicating target atlas information, an application target of the post filter and nnpfa_attribute_count which is the number of attribute images included in target atlas information. nnpfa_atlas_id is an ID of the target atlas, or an identification number used to identify each patch of the attribute image. nnpfa_atlas_id is set to atlasID. nnpfa_attribute_count represents the number of the attribute images related to the three-dimensional data indicated by each atlasID.

If nnpfa enabled flag[i] is 0, processing by the neural-network filter is not performed on the attribute image i. nnpfa_enabled_flag [i] is decoded for each attribute image, indicating whether to perform, on the attribute image i, post filtering by the neural-network.

The attribute image filter unit 308 uses the neural-network to improve the image quality and definition of the image resulting from decoding by the attribute image decoder 307. In a case that the atlas information identified by each atlasID shows multiple attribute images, the attribute image filter unit 308 performs filtering processing by switching the characteristics SEI and the like on a per attribute image basis. More specifically, the attribute image filter unit 308 performs filtering processing based on the characteristics SEI indicated by nnpfa_id[i], on an attribute image i (i = 0..nnpfa_attribute_count - 1) identified by number i from among one or more attribute images. Specifically, if nnpfa enabled flag [i] is 1, processing is performed on the attribute image i, and if nnpfa_enabled_flag [i] is 0, processing is not performed on the attribute image i.

The attribute image filter unit 308 derives the following variables depending on DecAttrChromaFormat. DecAttrChromaFormat is a chroma format of the attribute image.

```
SW = SubWidthC = 1, SH = SubHeghtC = 1 (DecAttrChromaFormat == 0)
SW = SubWidthC = 2, SH = SubHeghtC = 2 (DecAttrChromaFormat == 1)
SW = SubWidthC = 2, SH = SubHeghtC = 1 (DecAttrChromaFormat == 2)
SW = SubWidthC = 1, SH = SubHeghtC = 1 (DecAttrChromaFormat == 3)
```

Here, SW = SubWidthC and SH = SubHeightC indicate the sub-sampling ratio of color components to luma components.

The attribute image filter unit 308 receives input of the following and outputs FilteredAttrFrame[cIdx][y][x]. FilteredAttrFrame[cIdx][y][x] is a three-dimensional array indicating a filtered attribute image. The value of each array indicates a pixel value for a component cIdx at a position (x, y). Here, cIdx = 0..DecAttrNumComp - 1, x = O..DecAttrWidth - 1, y = O..DecAttrHeight - 1.

nnpfa id [i]: indicates the identification number (ID) of the target neural-network post-filter which is specified by characteristics SEI message (hereinafter referred to as the characteristics SEI) indicating a neural-network model.

DecAttrHeight: the height of the attribute image.

DecAttrWidth: the width of the attribute image.

DecAttrNumComp: the number of components of the attribute image.

DecAttrChromaFormat: the chroma format of the attribute image. Here, DecAttrChromaFormat depends on ChromaFormatIdc of the attribute image, and may be, for example, 1 (YUV 4:2:0) or 3 (YUV 4:4:4).

DecAttrFrame[cIdx][y][x]: a 3-dimensional array indicating a decoded attribute image. The value of each array indicates a pixel value for a component cIdx at a position (x, y). Here, cIdx = 0..DecAttrNumComp - 1, x = O..DecAttrWidth

-1,.y = O..DecAttrHeight - 1.

In the configuration described above, the network model (performance of the filter) to be individually applied to the attribute image i is indicated by the characteristics SEI, thus producing the effect of improving the image quality. Furthermore, whether the filter is individually applied to the attribute image i can be controlled, thus producing the effect of improving the image quality. In other words, switch-on and -off of the network model and the filter is applied on a per attribute image basis.

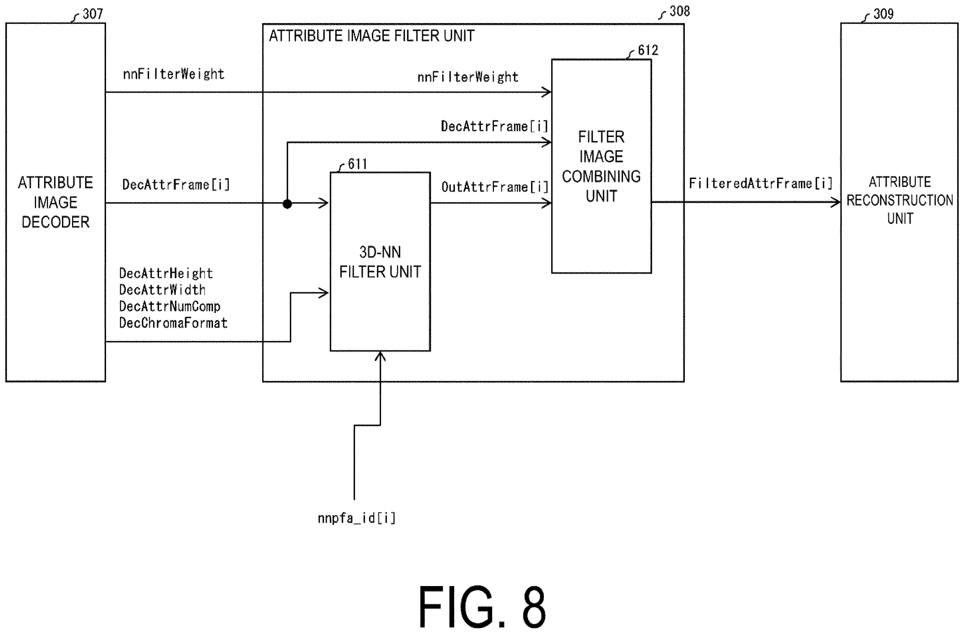

FIG. 8 is a functional block diagram illustrating a configuration of the attribute Image Filter Unit 308. The attribute image filter unit 308 includes a 3D-NN filter unit 611 and a filter image combining unit 612.

If nnpfa enabled flag[i] is 0, processing by the neural-network filter is not performed on the attribute image i. If nnpfa_enabled_flag[i] is 1, the header decoder 301 performs decoding nnpfa id[i] and nnpfa_filter_weight [i] which is a value indicating the intensity of the weight of the neural-network filter in the attribute image i, and derives the weighting factor nnFilterWeight of the neural-network filter in the attribute image i from nnpfa_filter_weight[i] as described below. nnFilterWeight = nnpfa_filter_weight[i]

In the configuration described above, the weighting factor of the neural-network filter is individually indicated for the attribute image i, thus allowing the filter to be applied at different intensities on a per attribute image basis. This is effective in improving the image quality.

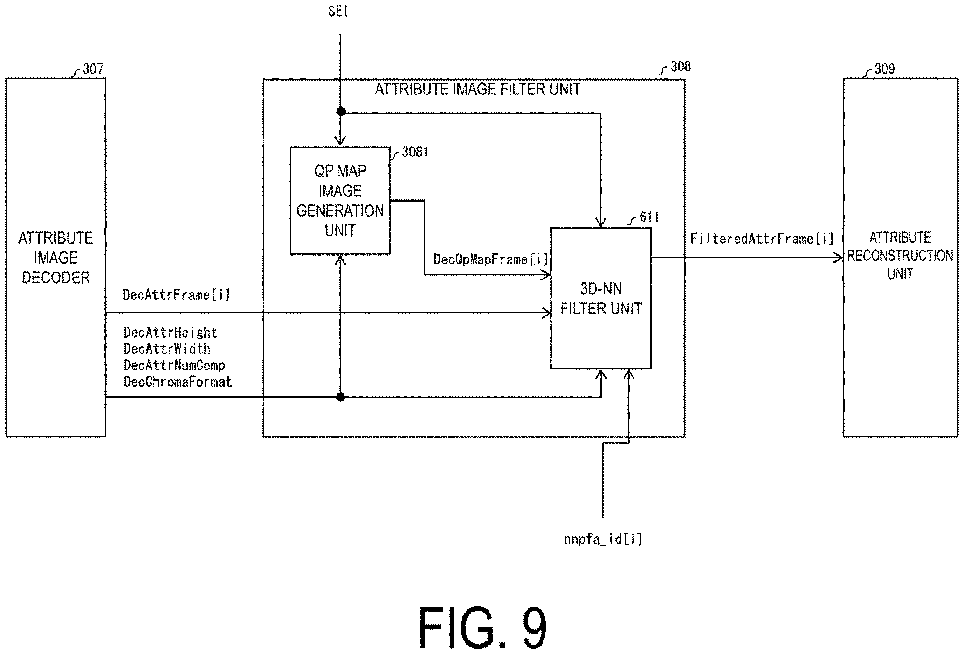

FIG. 9 is a functional block diagram illustrating a configuration of the attribute image filter unit 308 in the 3D data decoding apparatus 31. The attribute image filter unit 308 includes a QP map image generation unit 3081 and a 3D-NN filter unit 611. Here, QP indicates a quantization parameter, and indicates the roughness of the coding in each portion of the image. For example, QP may be a parameter used for quantization of prediction residuals in the image decoding apparatus. This means that a larger value of QP leads to a larger quantization step size, that is, a coarser accuracy and a messier picture.

Operation of QP Map Image Generation Unit 3081

In a case that nnpfa qp_present flag is true, the QP map image generation unit 3081 derives a QP map image DecQpMapFrame using the following equation. nnpfa_qp_present_flag is a flag indicating whether a QP used in the filtering processing of the attribute image is present.
nnpfa_qp_data_format indicates the format of the quantization parameter (QP) used in the filtering processing on the attribute images. 0 indicates a single QP value. 1 indicates a two-dimensional QP map.

If nnpfa_qp_data_format is a value equal to 0 (for a single QP), then the quantization step size Qp and QP map image DecQpMapFrame of the attribute image are set as follows:

```
Qp = nnpfa_qp
DecQpMapFrame[y][x] = Qp
```

If nnpfa_qp_data_format is a value equal to 1 (for a two-dimensional QP map), QpMap, QpMapWidth, Qp-MapHeight, QpMapWidthRatio, QpMapHeightRatio, and DecQpMapFrame [cy] [cx] are derived as described below. nnpfa_qp map is a two-dimensional QP map used in the filtering processing of the attribute image, QpMapWidth and QpMapHeight represent the width and height of nnpfa_qp_map, and QpMapWidthRatio and QpMapHeightRatio represent the ratio of width to height of nnpfa_qp_map and the ratio of width to height of the chroma image.

```
QpMapWidth = nnpfa_qp_map_width_minus1 + 1
QpMapHeight = nnpfa_qp_map_height_minus1 + 1
QpMapWidthRatio = (DecAttrWidth / SW) / QpMapWidth
QpMapHeightRatio = (DecAttrHeight / SW) / QpMapHeight
DecQpMapFrame[cy][cx] =
nnpfa_qp_map[cy/QpMapHeightRatio][cx/QpMapWidthRatio]
```

Note that coded data may be decoded for which a condition for a conformance stream is that QpMapWidthRatio and QpMapHeightRatio are integers. QpMapWidthRatio, QpMapHeightRatio may be the exponential multiplier of 2, for example, 1, 2, 4, 8, 16, 32, or 64.
nnpfa_qp_map[][] is a syntax indicating a two-dimensional QP map used in the filtering processing of the attribute image. nnpfa_qp_map_width_minus1 is a syntax indicating subtraction of 1 from the width of the two-dimensional QP map used in the filtering processing of the attribute image. nnpfa_qp_map_height_minus1 is a syntax indicating height minus 1 of the two-dimensional QP map used in the filtering processing on the attribute images.

Here, SW = SubWidthC and SH = SubHeightC are each a variable representing the sub-sampling of color components, in other words, the resolution ratio of chroma to luma. cx and cy represent the coordinates of a chroma pixel, and the ranges of ex and cy are respectively ex = 0..(DecAttrWidth/SW)-1, and cy = 0..(DecAttrHeight/SH) - 1.

In a case that nnpfa_qp_present_flag is false, the QP map image generation unit 3081 may generate a QP map image DecQpMapFrame based on the QP that is decoded by the attribute image decoder 307.

According to the configuration described above, the QP is individually decoded for the attribute image i and indicated as one component (one channel) of the input tensor, and thus the filter can be applied at different intensities on a per attribute image basis, producing an effect of improving the image quality.

Furthermore, according to the configuration described above, a single QP and a two-dimensional QP can be selected on a per attribute image basis, and thus the two-dimensional QP is used in a case that the QP varies significantly within the picture, and otherwise the single QP is used. The size (granularity) of the two-dimensional QP can also be set, thus allowing the code amount and the image quality to be balanced. Furthermore, the size of the QP map is directly indicated, and thus the number of syntax elements of nnpfa_qp_map is determined without decoding of the attribute image (DecAttrWidth and DecAttrHeight), decoding easily.

The 3D-NN filter unit 611 receives input of nnpfa id, DecAttrHeight, DecAttrWidth, DecAttrNumComp, DecAttrChromaFormat, and DecAttrFrame. The 3D-NN filter unit 611 outputs OutAttrFrame [][][]. 3D-NN Filter Unit 611

The neural-network model has topologies such as the number of convolutions and the number of layers, kernel size, and connection relationship, for example.

Here, the neural-network model (hereinafter referred to as the NN model) means the elements and connection relationships (topologies) of the neural-network, and the parameters (weight and bias) of the neural-network. Note that the 3D-NN filter unit 611 may fix the topologies, while switching only the parameters in accordance with the image to be filtered.

The attribute image filter unit 308 derives from the DecAttrFrame, the input InputTensor to the 3D-NN filter unit 611, and the 3D-NN filter unit 611 uses inputTensor to performs filtering processing based on the neural-network model. The neural-network model used is a model corresponding to nnpfa_id. The input image may be an image for each component, or an image including multiple components as channels.

The 3D-NN filter unit 611 may repeatedly apply the following processing.

The 3D-NN filter unit 611 performs as many convolution operations (conv) as the layers on inputTensor and the kernel k[m][n][yy][xx], and adds bias to the result of the operation to generate an output image outputTensor.

Here, m is the number of channels of inputTensor, n is the number of channels of outputTensor, yy is the height of kernel k, and xx indicates the width of kernel k.

For each layer, outputTensor is generated from inputTensor.

outputTensor[nn][yy][xx] = ΣΣΣ(k[mm][nn][i][j] * inputTensor[mm][yy + j - of] [xx + i - of] + bias[nn])

Here, nn = 0..n - 1, mm = 0..m - 1, yy = 0..height - 1, xx = 0..width - 1, i = 0..yy - 1, and j = 0..xx - 1. width is the width of each of inputTensor and outputTensor, and height is the height of each of inputTensor and outputTensor. Σ is the sum of mm = 0..m - 1, i = 0..yy - 1, and j = 0..xx - 1. of is the width or height of a region required around inputTensor to generate outputTensor.

For 1×1 Conv, Σ represents the sum of mm = 0..m - 1, i = 0. and j = 0. At this time, of = 0 is set. For 3 × 3 Conv, Σ represents the sum of mm = 0..m - 1, i = 0..2, and j = 0..2. At this time, of = 1 is set.

When the value of yy + j - of is less than 0 or greater than or equal to height, or the value of xx + i - of is less than 0 or greater than or equal to width, the value of inputTensor[mm][yy + j - of][xx + i - of] may be 0. Alternatively, the value of inputTensor[mm] [yy + j - of][xx + i - of] may be inputTensor[mm] [yclip] [xclip]. Here, yclip is max(0, min(yy + j - of, height - 1)), and xclip is (0, min(xx + i - of, width - 1)).

For the next layer, by using outputTensor obtained as new inputTensor, as many processing operations as the layers are repeated. An activation layer may be provided between the layers. A pooling layer or skip connection may be used. OutAttrFrame is derived from outputTensor obtained last.

A kernel k'[n] [yy] [xx] may be used to perform processing referred to as Depth wise Conv and expressed by the equation below. Here, nn = 0..n - 1, xx = 0..width - 1, and yy - 0..height - 1.

outputTensor[nn][yy][xx] = ΣΣ(k'[nn][i][j] * inputTensor[nn][yy + j - of][xx + i - of] + bias[nn])

Non-linear processing referred to as Activate, for example, ReLU, may be used. ReLU(x) = x >= 0 ? x :0 leakyReLU indicated in the following equation may be used.

leakyReLU(x) = x >= 0 ? x : a * x

Here, a is a prescribed that is less than 1, for example, 0.1 or 0.125. All of the above-described values k, bias, and a are defined as integers for an integer operation, and right shift is performed after conv to generate outputTensor.

In ReLU, for a value less than 0, 0 is always output, and for a value greater than or equal to 0, an input value is directly output without being processed. On the other hand, in leakyReLU, for a value less than 0, linear processing is performed with a gradient set by a. In ReLU, the gradient for a value less than 0 is lost, possibly making learning less likely to progress. In leakyReLU, the gradient for a value less than 0 is left, making the above-described problem less likely to occur. In leakyReLU(x) described above, PReLU may be used in which the value of a is parameterized.

Basic Configuration of 3D-NN Filter Unit

The 3D-NN filter unit 611 may include an NN processing unit configured to perform filtering using NN model parameters based on the NN model.

Operation of Attribute Image Filter Unit 308

The attribute image filter unit 308 derives input data inputTensor[][][] to the 3D-NN filter unit 611 based on a decoded image DecAttrFrame[][][] obtained by decoding by the attribute image decoder 307 and horizontal and vertical chroma sub-sampling values SW and SH of the decoded image.
Here, SW = SubWidthC and SH = SubHeightC are each a variable representing the sub-sampling of color components, in other words, the resolution ratio of chroma to luma.
The attribute image filter unit 308 may use the first color component of the target image DecAttrFrame to derive inputTensor, and perform filtering processing.
inputTensor[0] [y] [x] = DecAttrFrame[0] [y] [x]
The attribute image filter unit 308 may use the target image DecAttrFrame with three channels to derive input-Tensor, and perform filtering processing.

```
inputTensor[0] [y] [x] = DecAttrFrame[0] [y] [x]
inputTensor[1][y][x] = DecAttrFrame[1][y/SH][x/SW]
inputTensor[2] [y] [x] = DecAttrFrame[2] [y/SH] [x/SW]
```

The attribute image filter unit 308 may deploy the luma of a 4:2:0 image in the channel direction and set the resolution equal to that of a chroma image (channels in a YYYYUV format) to derive inputTensor.

```
inputTensor[0][cy][cx] = DecAttrFrame[0][cy * 2 ][cx * 2 ]
inputTensor[1][cy][cx] = DecAttrFrame[0][cy * 2 ][cx * 2 + 1]
inputTensor[2][cy][cx] = DecAttrFrame[0][cy * 2 + 1][cx * 2 ]
inputTensor[3][cy][cx] = DecAttrFrame[0][cy * 2 + 1][cx * 2 + 1]
inputTensor[4][cy][cx] = DecAttrFrame[1][cy][cx]
inputTensor[5][cy][cx] = DecAttrFrame[2][cy][cx]
```

Here, x and y represent the coordinates of a luma pixel. For example, in DecAttrFrame[][y][x], the ranges of x and y are respectively x = O..DecAttrWidth - 1 and y = O..DecAttrHeight - 1. cx and cy represent the coordinates of a chroma pixel, and the ranges of ex and cy are respectively ex = 0..(DecAttrWidth/SW) - 1, and cy = 0..(DecAttrHeight/SH) - 1.

Operation of Attribute Image Filter Unit 308

The attribute image filter unit 308 derives input data inputTensor[][][] to the 3D-NN filter unit 611 based on the decoded image DecAttrFrame[][][] obtained by decoding by the attribute image decoder 307, the horizontal and vertical chroma sub-sampling values SW and SH of the decoded image, and a QP map image DecQpMapFrame output by the QP map image generation unit 3081.
Here, SW = SubWidthC and SH = SubHeightC are each a variable representing the sub-sampling of color components, in other words, the resolution ratio of chroma to luma.
The attribute image filter unit 308 may derive inputTensor using the first channel of the target image DecAttrFrame and DecQpMapFrame with one channel.

```
inputTensor[0] [y] [x] = DecAttrFrame[0] [y] [x]
inputTensor[1][y][x] = DecQpMapFrame[y/SH][x/SW]
```

The attribute image filter unit 308 may derive inputTensor using the target image DecAttrFrame with three channels and DecQpMapFrame with one channel.

```
inputTensor[0] [y] [x] = DecAttrFrame[0] [y] [x]
inputTensor[1][y][x] = DecAttrFrame[1][y/SH][x/SW]
inputTensor[2] [y] [x] = DecAttrFrame[2] [y/SH] [x/SW]
inputTensor[3][y][x] = DecQpMapFrame[y/SH]x/SW
```

The attribute image filter unit 308 may deploy the luma of a 4:2:0 image in the channel direction and set the resolution equal to that of a chroma image (channels in a YYYYUV format) to derive inputTensor.

```
inputTensor[0][cy][cx] = DecAttrFrame[0][cy * 2 ][cx * 2 ]
inputTensor[1][cy][cx] = DecAttrFrame[0][cy * 2 ][cx * 2 + 1]
inputTensor[2][cy][cx] = DecAttrFrame[0][cy * 2 + 1][cx * 2 ]
inputTensor[3][cy][cx] = DecAttrFrame[0][cy * 2 + 1][cx * 2 + 1]
inputTensor[4][cy][cx] = DecAttrFrame[1][cy][cx]
inputTensor[5][cy][cx] = DecAttrFrame[2][cy][cx]
inputTensor[6][cy][cx] = DecQpMapFrame[cy][cx]
```

Here, x and y represent the coordinates of a luma pixel. For example, in DecAttrFrame[][y][x], the ranges of x and y are respectively x = O..DecAttrWidth - 1 and y = O..DecAttrHeight - 1. cx and cy represent the coordinates of a chroma pixel, and the ranges of ex and cy are respectively ex = 0..(DecAttrWidth/SW) - 1, and cy = 0..(DecAttrHeight/SH) - 1.

The 3D-NN filter unit 611 performs the NN filtering processing, and derives outputTensor from the inputTensor. The filtering processing indicated by PostProcessingFilter() may be performed in units of patch sizes (inpPatchWidth x inpPatchHeight) as described below.

```
for(cTop = 0; cTop < InpHeight; cTop += inpPatchHeight)
  for(cLeft = 0; cLeft < InpWidth; cLeft += inpPatchWidth) {
  DeriveInputTensors()
  outputTensor = PostProcessingFilter(inputTensor)
  StoreOutputTensors()
  }
```

Here, DeriveInputTensors() indicates input data setting, and StoreOutputTensors() indicates output data storage. InpWidth and InpHeight indicate the size of input data, and may be DecAttrWidth, DecAttrHeight. inpPatchWeight and inpPatchHeight are the width and height of a patch.

The attribute image filter unit 308 derives the output image OutAttrFrame from NN output data outputTensor[][][] in a three-dimensional array corresponding to the output data of the 3D-NN filter unit 611.

The attribute image filter unit 308 may derive the output image OutAttrFrame by using the following equation:

$$\mathrm{OutAttrFrame}[0][y][x] = \mathrm{outputTensor}[0][y][x]$$

The attribute image filter unit 308 may derive the output image OutAttrFrame by using the following equations:

$$\mathrm{OutAttrFrame}[0][y][x] = \mathrm{outputTensor}[0][y][x]$$

$$\mathrm{OutAttrFrame}[1][y/\mathrm{SH}][x/\mathrm{SW}] = \mathrm{outputTensor}[1][y][x]$$

$$\mathrm{OutAttrFrame}[2][y/\mathrm{SH}][x/\mathrm{SW}] = \mathrm{ouputTensor}[2][y][x]$$

The attribute image filter unit 308 may derive the output image OutAttrFrame by using the following equations:

$$\mathrm{OutAttrFrame}[0][cy * 2 \quad][cx * 2 \quad] = \mathrm{outputTensor}[0][cy][cx]$$

$$\mathrm{OutAttrFrame}[0][cy * 2 \quad][cx * 2 + 1] = \mathrm{outputTensor}[1][cy][cx]$$

$$\mathrm{OutAttrFrame}[0][cy * 2 + 1][cx * 2 \quad] = \mathrm{outputTensor}[2][cy][cx]$$

$$\text{OutAttrFrame}[0][cy * 2 + 1][cx * 2 + 1] = \text{outputTensor}[3][cy][cx]$$

$$\text{OutAttrFrame}[1][cy][cx] = \text{outputTensor}[4][cy][cx]$$

$$\text{OutAttrFrame}[2][cy][cx] = \text{outputTensor}[5][cy][cx]$$

For output in 4:4:4 format, the attribute image filter unit 308 may derive the output image OutAttrFrame by using the following equations:

$$\text{OutAttrFrame}[0][y][x] = \text{outputTensor}[0][y][x]$$

$$\text{OutAttrFrame}[1][y][x] = \text{outputTensor}[1][y][x]$$

$$\text{OutAttrFrame}[2][y][x] = \text{outputTensor}[2][y][x]$$

For output in 4:4:4 format, the attribute image filter unit 308 may derive the output image OutAttrFrame by using the following equations:

$$\text{OutAttrFrame}[0][cy * 2 \quad][cx * 2 \quad] = \text{outputTensor}[0][cy][cx]$$

$$\text{OutAttrFrame}[0][cy * 2 \quad][cx * 2 + 1] = \text{outputTensor}[1][cy][cx]$$

$$\text{OutAttrFrame}[0][cy * 2 + 1][cx * 2 \quad] = \text{outputTensor}[2][cy][cx]$$

$$\text{OutAttrFrame}[0][cy * 2 + 1][cx * 2 + 1] = \text{outputTensor}[3][cy][cx]$$

$$\text{OutAttrFrame}[1][cy * 2 \quad][cx * 2 \quad] = \text{outputTensor}[4][cy][cx]$$

$$\text{OutAttrFrame}[1][cy * 2 \quad][cx * 2 + 1] = \text{outputTensor}[4][cy][cx]$$

$$\text{OutAttrFrame}[1][cy * 2 + 1][cx * 2 \quad] = \text{outputTensor}[4][cy][cx]$$

$$\text{OutAttrFrame}[1][cy * 2 + 1][cx * 2 + 1] = \text{outputTensor}[4][cy][cx]$$

$$\text{OutAttrFrame}[2][cy * 2 \quad][cx * 2 \quad] = \text{outputTensor}[5][cy][cx]$$

$$\text{OutAttrFrame}[2][cy * 2 \quad][cx * 2 + 1] = \text{outputTensor}[5][cy][cx]$$

$$\text{OutAttrFrame}[2][cy * 2 + 1][cx * 2 \quad] = \text{outputTensor}[5][cy][cx]$$

$$OutAttrFrame[2][cy * 2 + 1][cx * 2 + 1] = outputTensor[5][cy][cx]$$

$$OutAttrFrame[0], OutAttrFrame[1], and OutAttrFrame[2]$$

respectively represent the luma channel, chroma (Cb) channel, and chroma (Cr) channel of the output image.

The filter image combining unit 612 synthesizes DecAttrFrame and OutAttrFrame based on the value of nnFilterWeight corresponding to the attribute image i, and outputs FilteredAttrFrame.

Each pixel of FilteredAttrFrame is derived as follows.

$$FilteredAttrFrame[cIdx][y][x] = (nnFilterWeight * OutAttrFrame[cIdx][y][x] +$$

$$(maxWeight - nnFilterWeight) * DecAttrFrame[cIdx][y][x] + offset) >> shift$$

Here, cldx = 0..DecAttrNumComp - 1, x = O..DecAttrWidth - 1,.and y = O..DecAttrHeight - 1. The following is also possible: shift = 6, maxWeight = 1 << shiftoffset = 1 << (shift - 1).

The attribute image filter unit 308 outputs OutAttrFrame as FilteredAttrFrame.

$$FilteredAttrFrame[cIdx][y][x] = OutAttrFrame[cIdx][y][x]$$

Here, cldx = 0..DecAttrNumComp - 1, x = O..DecAttrWidth - 1,.and y = O..DecAttrHeight - 1.

In a case where the filtering processing is performed on the geometry image, DecAttrFrame and OutAttrFrame may respectively be replaced with DecGeoFrame and OutGeoFrame.

According to the configuration described above, for the attribute image i, the degree of application of the characteristics SEI and the NN model is individually varied depending on the activate image and the features of the frame, producing an effect of improving the image quality. Note that in a case that the processing is switched depending on the features on a per frame basis, persistent activation SEI may be decoded on a per PU basis.

Decoding of Characteristics SEI and Application of Filter

The header decoder 301 reads an SEI payload corresponding to a container of an SEI message, and decodes the characteristics SEI.

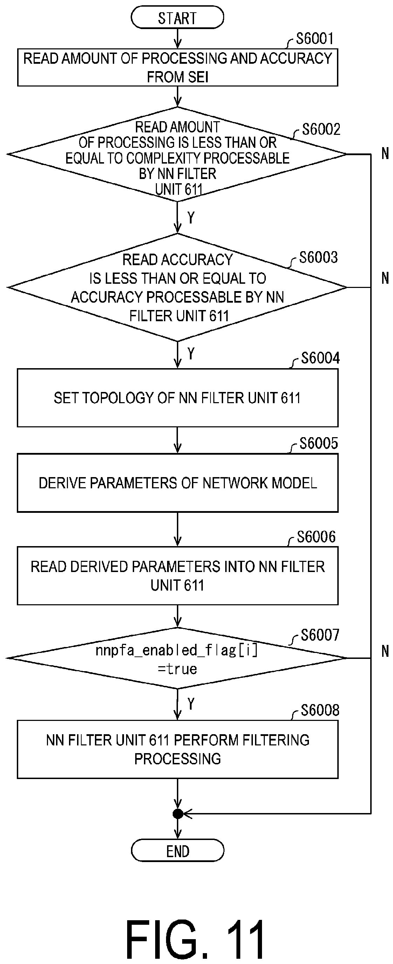

FIG. 11 is a diagram illustrating a flowchart of processing of the attribute image filter unit 308. The attribute image filter unit 308 performs the following processing in accordance with the parameters of the SEI message described above:

S6001: reads the amount of processing and accuracy from a neural-network complexity element;
S6002: in a case that the complexity processable by the 3D-NN filter unit 611 is exceeded, the processing terminates, otherwise, the processing proceeds to S6003;
S6003: in a case that the accuracy processable by the 3D-NN filter unit 611 is exceeded, the processing terminates, otherwise, the processing proceeds to S6004;
S6004: identifies the network model from the characteristics SEI and sets the topology of the 3D-NN filter unit 611;
S6005: derives the parameters of the network model from the characteristics SEI;
S6006: sets the derived parameters of the derived network model for the 3D-NN filter unit 611;
S6007: in a case that nnpfa_enabled_flag[i] of the activation SEI is false, the 3D NN filter unit 611 terminates, or in a case that nnpfa_enabled_flag[i] of the activation SEI is true, the processing proceeds to S6008;
S6008: performs filtering processing on the attribute image i and outputs the resultant attribute image i to the outside.

Configuration Example of Syntax

Neural-Network Post-filter Characteristics SEI

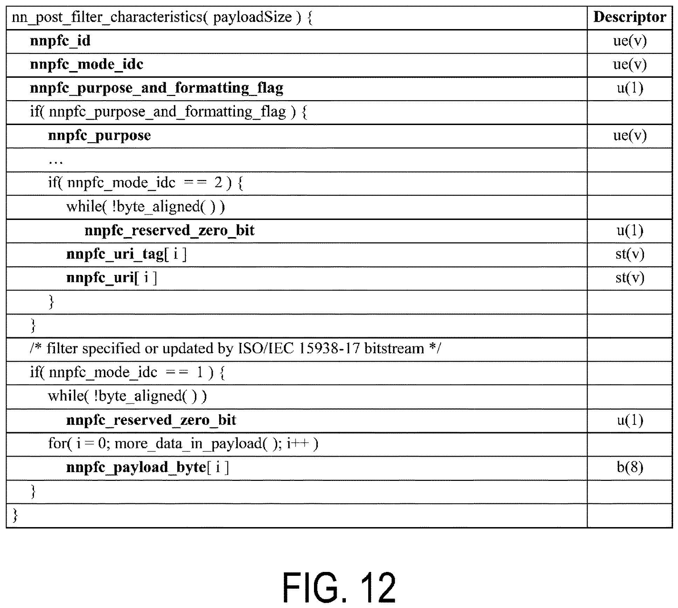

FIG. 12 illustrates a syntax of the characteristics SEI message nn_post_filter_characteristics (payloadSize) (hereinafter referred to as the characteristics SEI). An argument payloadSize represents the number of bytes in this SEI message.

The persistence scope in which the characteristics SEI is applied is a Code Video Sequence (CVS). In other words, the characteristics SEI is applied to each CVS. Note that CVS refers to a set of one or more access units including as the first access unit a randomly accessible access unit such as an Intra Random Access Picture (IRAP) or a Gradual Decoder Refresh Picture (GDR). The access unit includes pictures displayed at the same time. The IRAP may be one of Instantaneous Decoder Refresh (IDR), Clean Random Access (CRA), and Broken Link Access (BLA).

In the characteristics SEI, the syntax described below is coded, decoded, and transmitted.

nnpfc_id includes an identification number that can be used to identify post-filtering processing. The value of nnpfc_id must be 0 or more and the 32nd power of 2 - 2 or less. Values of nnpfc_id of 256 or more and 511 or less, or the 31st power of 2 or more and the 32nd power of 2 - 2 or less are reserved for future use. Accordingly, the decoder ignores the values of nnpfc_id of 256 or more and 511 or less, or the 31st power of 2 or more and the 32nd power of 2 - 2 or less.

nnpfc_mode_idc indicates a method for transmitting a network model for a post filter. 0 indicates that the method is indicated as an external means not indicated in the written standards. 1 indicates that the method is indicated in the NNC standard (ISO/IEC 15938-17). 2 indicates that the method is indicated by a Uniform Resource Identifier (URI).

nnpfc_purpose_and_formatting_flag indicates whether to transmit post-filtering processing and an I/O format. If nnpfc_purpose_and_formatting_flag is 1, nnpfc_purpose is further decoded. For the syntax of the input/output format, the format of the input tensor and the format of the output tensor may be coded and decoded.

nnpfc_purpose is purpose information indicating the purpose of the post-filtering processing. The value of nnpfc_purpose must be 0 and more and the 32nd power of 2 - 2. Values of nnpfc_purpose greater than 7 is reserved for future specifications. The decoder compliant with this version of the specifications shall ignore the SEI message including the reservation value of nnpfc_purpose.

The value of nnpfc_purpose being 0 indicates unknown or undefined.

If the value of nnpfc_purpose is 1, the purpose is to improve the image quality.

If the value of nnpfc_purpose is 2 indicates upsampling to the 4:2:2 chroma format or 4:4:4 chroma format, or upsampling from the 4:2:2 chroma format to the 4:4:4 chroma format.

If the value of nnpfc_purpose is 3, the width or height of the decoded output image is increased with the chroma format remaining unchanged.

If the value of nnpfc_purpose is 4, the width or height of the decoded output image is increased with the chroma format changed.

If the value of nnpfc_purpose is 5, the purpose is to improve the image quality of the attribute image of a V3C component. Note that the V3C component is 3D data including geometry information and attribute information associated with atlas information.

If the value of nnpfc_purpose is 6, the purpose is to improve the image quality of the geometry image of the V3C component.

In the present configuration, the V3C component can be indicated as nnpfc_purpose, producing an effect of providing resources such as memory and GPU for decoding and reconstruction processing for 3D data.

nnpfc_payload_byte is a byte sequence indicating a bit stream of the NNC standard. nnpfc_reserved_zero_bit is a bit for aligning the starting position of nnpfc_payload_byte with a byte boundary.

Neural-Network Post-filter Activation SEI

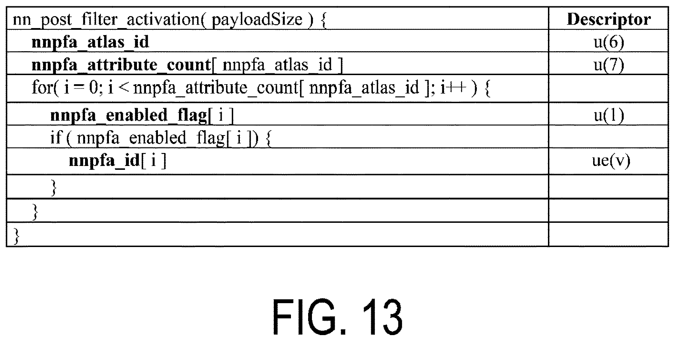

FIG. 13 illustrates a configuration example of a syntax for nn_post_filter_activation of neural-network post-filter activation SEI (hereinafter referred to as the activation SEI).

The persistence scope in which the activation SEI is applied is the CVS. However, the persistence scope in which the characteristics SEI is applied may be in picture units (PUs). Note that a picture unit (PU) is a set of non-Video Coding Layer (VCL) NAL units associated with NAL units including all VCL NAL units of a coded picture. Note that the VCL NAL is an NAL including a slice that is a portion of a picture. This SEI message is decoded in and applied to the attribute image in each CVS (or PU).

In a case that the persistence scope of the activation SEI is applied as the CVS, the presence or absence of the filter application, the network model of the applied filter (characteristics SEI), a difference in intra-picture QP, and the like can be controlled on a per attribute image basis.

In a case that the persistence scope of the activation SEI is applied in PUs, the presence or absence of the filter application, the network model of the applied filter (characteristics SEI), a difference in intra-picture QP, and the like can be controlled on a per attribute image basis and on a per frame (picture) basis.

In the activation SEI, the syntax described below is coded, decoded, and transmitted.

nnpfa_atlas_id includes an identification number that can be used to identify each patch of the attribute image i. nnpfa_atlas_id is set to an atlasID.

nnpfa_attribute_count represents the number of the attribute images related to the three-dimensional data (e.g., the atlas information) indicated for each atlasId. nnpfa_attribute_count indicates the number of types of attributes (color, reflectivity, and the like) of the points of a patch. Multiple the attribute images included in the three-dimensional data are identified by the number i from 0 to nnpfa_attribute_count-1.

nnpfa_enabled_flag[i] is decoded for each attribute image and indicates whether to perform post filtering on the attribute image i using the neural-network indicated by the characteristics SEI. If a value is 1, post-filtering using the neural-network is performed, and if a value is 0, post-filtering using the neural-network is not performed.

nnpfa_id[i] indicates the id of the characteristics SEI to be applied to the attribute image i. The post-filtering processing is applied to the attribute image i, the post-filtering processing being indicated by the characteristics SEI in which nnpfc_id is equal to nnfpa id.

Another Configuration

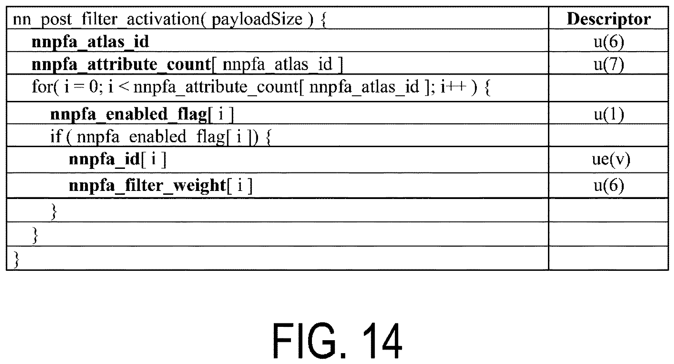

FIG. 14 illustrates a configuration example of a syntax for nn_post_filter_activation of the activation SEI. nnpfa_filter_weight[i] is a value indicating a weighting factor of the neural-network filter used in the attribute image filter unit 308 for the attribute image i.

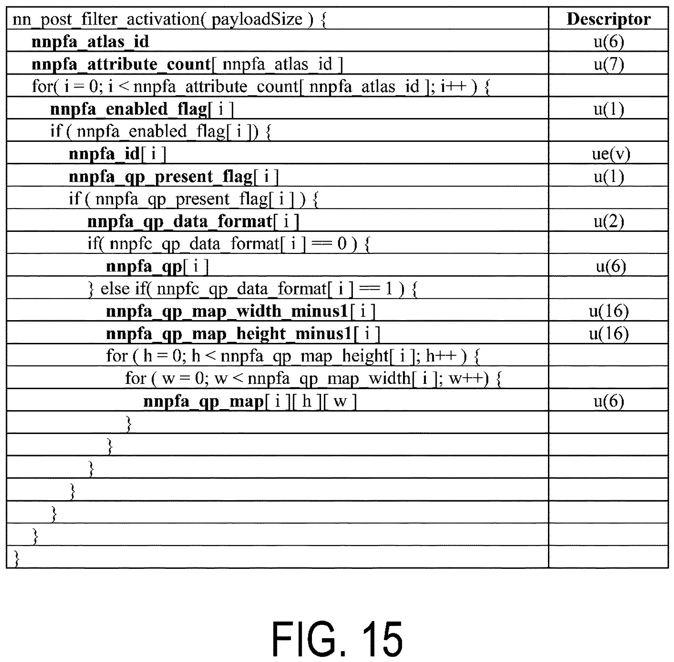

FIG. 15 illustrates a configuration example of a syntax for nn_post_filter_activation of the activation SEI.

nnpfa_qp_present_flag[i] is a flag indicating whether a QP used for filtering processing of the attribute image i is present. 1 indicates the presence of the QP. 0 indicates the absence of the QP.

nnpfa_qp_data_format[i] indicates the format of the QP used for the filtering processing of the attribute image i. 0 indicates a single QP value. 1 indicates a two-dimensional QP map.

nnpfa_qp[i] indicates a QP value used for the filtering processing of the attribute image i.

nnpfa_qp_map_width_minus1[i] indicates the width of the two-dimensional QP map minus one, the two-dimensional QP map being used for the filtering processing of the attribute image i.

nnpfa_qp_map_height_minus1[i] indicates the height of the two-dimensional QP map minus one, the two-dimensional QP map being used for the filtering processing of the attribute image i.

nnpfa_qp_map[i][h][w] indicates the two-dimensional QP map used for the filtering processing of the attribute image i.

The other syntax elements are the same as those in FIG. 13, and the description thereof is omitted.

Configuration of 3D Data Coding Apparatus according to First Embodiment

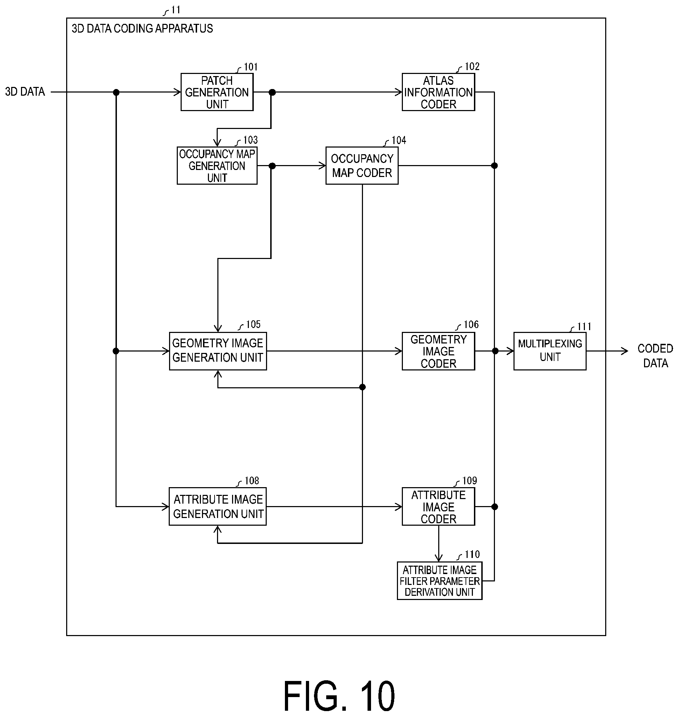

FIG. 10 is a functional block diagram illustrating a general configuration of the 3D data coding apparatus 11 according to the first embodiment.

The 3D data coding apparatus 11 includes a patch generation unit 101, an atlas information coder 102, an occupancy map generation unit 103, an occupancy map coder 104, a geometry image generation unit 105, a geometry image coder 106, an attribute image generation unit 108, an attribute image coder 109, an attribute image filter parameter derivation unit 110, and a multiplexing unit 111. The 3D data coding apparatus 11 receives input of a point cloud or mesh as 3D data to output coded data.

The patch generation unit 101 receives input of 3D data, generates a set of patches (here rectangular images), and outputs the set. Specifically, the 3D data is divided into multiple regions, and each of the regions is projected onto a plane of any of the 3D bounding boxes (FIG. 3(a)) set on the 3D space to generate multiple patches. The patch generation unit 101 outputs, as atlas information, information related to the 3D bounding boxes (coordinates, size, and the like), and information related to mapping to projection planes (projection plane for each patch, coordinates, size, the presence or absence of rotation, and the like).

The atlas information coder 102 codes the atlas information output from the patch generation unit 101, and outputs an atlas information coding stream. The atlas information coder 102 sets, equal to nnpfa_atlas_id, the value of the atlasID to which the above-described SEI is applied.

The occupancy map generation unit 103 receives input of a set of patches output from the patch generation unit 101, and generates an occupancy map indicating a valid region of each patch (region where 3D data is present) as a 2D binary image (e.g., a valid region is represented as 1, and an invalid region is represented as 0) (FIG. 3(b)). Different values such as 255 and 0 may respectively be used for the valid area and the invalid area.

The occupancy map coder 104 receives input of an occupancy map output from the occupancy map generation unit 103, and outputs an occupancy map coding stream and a coded occupancy map. The coding scheme used is VVC, HEVC, or the like.

The geometry image generation unit 105 generates a geometry image in which a depth value for the projection plane for each patch is stored based on the 3D data, the occupancy map, the coded occupancy map, and the atlas information (FIG. 3C). The geometry image generation unit 105 derives, as p_min(x,y,z), a point with the minimum depth to the projection plane from among the points projected on a pixel g(x,y). The geometry image generation unit 105 derives, as p_max(x,y,z), a point with the maximum depth from among the points projected on the pixel g(x,y) and located at a prescribed distance d from p_min(x,y,z). Geometry images each obtained by projecting p_min(x,y,z) on all the pixels of the projection plane are set as geometry images for the Near layers (images 0, 2, 4, ..., 2N in FIG. 4). Geometry images each obtained by projecting p_max(x,y,z) on all the pixels of the projection plane are set as geometry images for the Far layers (images 1, 3, 5, ..., 2N+1 in FIG. 4).

The geometry image coder 106 receives input of the geometry images and outputs a geometry image coding stream, and coded geometry images. The coding scheme used is VVC, HEVC, or the like. The geometry image coder 106 may code the geometry images of the Near layers as intra-pictures (Ipictures), and code the geometry images of the Far layers as inter-pictures (P pictures or B pictures).

The attribute image generation unit 108 generates an attribute image in which color information (for example, YUV value, RGB value, or the like) for a projection plane for each patch is stored based on the 3D data, the coded occupancy map, the coded geometry images and the atlas information (FIG. 3(d)). The attribute image generation unit 108 determines the value of the attribute corresponding to the point p_min (x,y,z) with the minimum depth calculated by the geometry image generation unit 106, and sets attribute images on which the value is projected as the attribute images of the Near layers (images 0, 2, 4, ..., 2N in FIG. 4). For p_max(x,y,z), attribute images similarly determined are set as the attribute images of the Far layers (images 1, 3, 5, ..., 2N+1 in FIG. 4).

The attribute image coder 109 receives input of the attribute images, and outputs an attribute image coding stream, and coded attribute images. The coding scheme used is VVC, HEVC, or the like. The attribute image coder 109 may code the attribute images of the Near layers as I pictures and code the attribute images of the Far layers as P pictures or B pictures.

The attribute image coder 109 sets the SEI described above equal to the value of nnpfa_attribute_count.

The attribute image filter parameter derivation unit 110 receives input of a coded attribute image and an original attribute image, selects or derives filter parameters optimal in the neural-network-based filtering processing, and outputs the filter parameters.

The attribute image filter parameter derivation unit 110 sets the SEI described above equal to the values of nnpfa_enabled_flag, nnpfa_id, and nnpfa_filter_weight. The values of nnpfa_qp_present_flag, nnpfa_qp_data_format, nnpfa_qp, nnpfa_qp_map_width_minus1, nnpfa_qp_map_height_minus1, and nnpfa_qp_map may be set.

The multiplexing unit 111 receives input of the filter parameters output from the attribute image filter parameter derivation unit 110, and outputs the filter parameters in a prescribed format. The prescribed format is, for example, SEI, which is supplemental enhancement information of video data, ASPS or AFPS, which is indication information of a data structure in the V3C standard, and ISOBMFF, which is a media file format standard. The multiplexing unit 111 also multiplexes the atlas information coding stream, the occupancy map coding stream, the geometry image coding stream, the attribute image coding stream, and the filter parameters to output the result of the multiplexing as coded data. The multiplexing scheme used is a byte stream format, ISOBMFF, or the like.

The embodiment of the present invention has been described in detail above referring to the drawings, but the specific configuration is not limited to the above embodiment and various amendments can be made to a design that fall within the scope that does not depart from the gist of the present invention.

The embodiment of the present invention is not limited to the above-described embodiment, and various modifications are possible within the scope of the claims. That is, an embodiment obtained by combining technical means modified appropriately within the scope of the claims is also included in the technical scope of the present invention.

Industrial Applicability

The embodiments of the present invention can be preferably applied to a 3D data decoding apparatus that decodes coded data in which 3D data is coded, and a 3D data coding apparatus that generates coded data in which 3D data is coded. The embodiments of the present invention can be preferably applied to a data structure of coded data generated by the 3D data coding apparatus and referenced by the 3D data decoding apparatus.

Reference Signs List

11 3D data coding apparatus
101 Patch generation unit

102 Atlas information coder
103 Occupancy map generation unit
104 Occupancy map coder
105 Geometry image generation unit
106 Geometry image coder
108 Attribute image generation unit
109 Attribute image coder
110 Attribute image filter parameter derivation unit
111 Multiplexing unit
21 Network
31 3D data decoding apparatus
301 Header decoder
302 Atlas information decoder
303 Occupancy map decoder
304 Geometry image decoder
306 Geometry reconstruction unit
307 Attribute image decoder
308 Attribute image filter unit
309 Attribute reconstruction unit
310 3D data reconstruction unit
41 3D data display apparatus

**Claims**

1. A 3D data decoding apparatus for decoding coded data into 3D data including location information and attribute information, the decoding apparatus comprising:

   a header decoder configured to decode the coded data into supplemental enhancement information of a deep learning post-filter;
   an attribute image decoder configured to decode the coded data into an attribute image; and
   an attribute image filter unit configured to perform filtering processing on the attribute image, wherein
   the header decoder performs decoding into purpose information indicating that the attribute image filter unit performs the filtering processing on the attribute image.

2. The 3D data decoding apparatus according to claim 1, wherein
   the header decoder performs decoding into filter application with a weight filter_weight[i] indicating a degree of the filter application on a per attribute image basis, and the attribute image filter unit performs filtering processing on the attribute image i by changing a filter strength on a per block or picture basis, using the filter_weight[i].

3. A 3D data coding apparatus for coding 3D data, the 3D data coding apparatus comprising:

   a multiplexing unit configured to code supplemental enhancement information of a deep learning post-filter;
   an attribute image filter parameter derivation unit configured to derive a filter parameter of an attribute image of the 3D data; and
   an attribute image coder configured to code the attribute image.

4. The 3D data coding apparatus according to claim 3, wherein

   the multiplexing unit codes purpose information indicating that attribute image filter unit performs filtering processing on the 3D data, and
   the attribute image filter parameter derivation unit codes additional filter application related to processing of a neural-network and including a weight filter weight indicating a degree of the filter application.

5. A 3D data decoding apparatus for decoding coded data into 3D data comprising location information and attribute information, the decoding apparatus comprising:

   a header decoder configured to decode the coded data into supplemental enhancement information of a deep learning post-filter;
an attribute image decoder configured to decode the coded data into an attribute image; and
an attribute image filter unit configured to perform filtering processing on the attribute image, wherein
the header decoder decodes the coded data into purpose information indicating that the attribute image filter unit performs the filtering processing on the attribute image, and decodes the coded data into a QP on a per attribute image basis, and the attribute image filter unit uses an application method for the QP to configure, on a per block or picture basis, the QP obtained by the decoding for a particular channel of an input tensor to a neural-network.

6.  The 3D data decoding apparatus according to claim 5, wherein
the header decoder performs decoding into a single QP or a two-dimensional QP as the QP on a per attribute image basis.

7.  A 3D data coding apparatus for coding 3D data, the 3D data coding apparatus comprising:

a multiplexing unit configured to code supplemental enhancement information of a deep learning post-filter;
an attribute image filter parameter derivation unit configured to derive a filter parameter of an attribute image of the 3D data; and
an attribute image coder configured to code the attribute image, wherein
the multiplexing unit codes purpose information indicating that attribute image filter unit performs filtering processing on the 3D data, and
the attribute image filter parameter derivation unit codes an application method for a QP to be configured, on a per block or picture basis, for a particular channel of an input tensor to a neural-network.

8.  The 3D data coding apparatus according to claim 7, wherein
the multiplexing unit codes a single QP or a two-dimensional QP as the QP on a per attribute image basis.

1

T → 3D DATA CODING APPARATUS ─Te→ ⬭ ─Te→ 3D DATA DECODING APPARATUS ─Td→ 3D DATA DISPLAY APPARATUS

11    21    31    41

# FIG. 1

FIG. 2

3D BOUNDING BOX

(b) OCCUPANCY MAP

(c) GEOMETRY IMAGE

(a) 3D DATA (POINT CLOUD)

(d) ATTRIBUTE IMAGE

# FIG. 3

Near LAYER

Far LAYER

FIG. 4

4 CHANNEL IMAGE

BR

BL

TR

TL

W/2

H/2

1 CHANNEL IMAGE

H

W

FIG. 5

FIG. 6

307

ATTRIBUTE
IMAGE
DECODER

DecAttrFrame[i]

DecAttrHeight
DecAttrWidth
DecAttrNumComp
DecChromaFormat

308

ATTRIBUTE IMAGE FILTER UNIT

611

3D-NN
FILTER UNIT

nnpfa_id[i]

FilteredAttrFrame[i]

309

ATTRIBUTE
RECONSTRUCTION
UNIT

FIG. 7

FIG. 8

SEI

307 ATTRIBUTE IMAGE DECODER

308 ATTRIBUTE IMAGE FILTER UNIT

3081 QP MAP IMAGE GENERATION UNIT

611 3D-NN FILTER UNIT

309 ATTRIBUTE RECONSTRUCTION UNIT

DecAttrFrame[i]

DecAttrHeight
DecAttrWidth
DecAttrNumComp
DecChromaFormat

DecQpMapFrame[i]

FilteredAttrFrame[i]

nnpfa_id[i]

# FIG. 9

EP 4 346 214 A1

FIG. 10

28

START

READ AMOUNT OF PROCESSING AND ACCURACY
FROM SEI — S6001

READ AMOUNT
OF PROCESSING IS LESS THAN OR
EQUAL TO COMPLEXITY PROCESSABLE
BY NN FILTER
UNIT 611 — S6002 → N

Y

READ ACCURACY
IS LESS THAN OR EQUAL TO
ACCURACY PROCESSABLE BY NN
FILTER UNIT 611 — S6003 → N

Y

SET TOPOLOGY OF NN FILTER UNIT 611 — S6004

DERIVE PARAMETERS OF NETWORK MODEL — S6005

READ DERIVED PARAMETERS INTO NN FILTER
UNIT 611 — S6006

nnpfa_enabled_flag[i]
=true — S6007 → N

Y

NN FILTER UNIT 611 PERFORM FILTERING
PROCESSING — S6008

END

# FIG. 11

| nn_post_filter_characteristics( payloadSize ) { | Descriptor |
|---|---|
| **nnpfc_id** | ue(v) |
| **nnpfc_mode_idc** | ue(v) |
| **nnpfc_purpose_and_formatting_flag** | u(1) |
| if( nnpfc_purpose_and_formatting_flag ) { | |
|    **nnpfc_purpose** | ue(v) |
|    ... | |
|    if( nnpfc_mode_idc == 2 ) { | |
|       while( !byte_aligned( ) ) | |
|         **nnpfc_reserved_zero_bit** | u(1) |
|       **nnpfc_uri_tag**[ i ] | st(v) |
|       **nnpfc_uri**[ i ] | st(v) |
|    } | |
| } | |
| /* filter specified or updated by ISO/IEC 15938-17 bitstream */ | |
| if( nnpfc_mode_idc == 1 ) { | |
|   while( !byte_aligned( ) ) | |
|     **nnpfc_reserved_zero_bit** | u(1) |
|   for( i = 0; more_data_in_payload( ); i++ ) | |
|     **nnpfc_payload_byte**[ i ] | b(8) |
|  } | |
| } | |

# FIG. 12

| nn_post_filter_activation( payloadSize ) { | Descriptor |
|---|---|
| **nnpfa_atlas_id** | u(6) |
| **nnpfa_attribute_count**[ nnpfa_atlas_id ] | u(7) |
| for( i = 0; i < nnpfa_attribute_count[ nnpfa_atlas_id ]; i++ ) { | |
| **nnpfa_enabled_flag**[ i ] | u(1) |
| if ( nnpfa_enabled_flag[ i ]) { | |
| **nnpfa_id**[ i ] | ue(v) |
| } | |
| } | |
| } | |

# FIG. 13

| nn_post_filter_activation( payloadSize ) { | Descriptor |
|---|---|
| **nnpfa_atlas_id** | u(6) |
| **nnpfa_attribute_count**[ nnpfa_atlas_id ] | u(7) |
| for( i = 0; i < nnpfa_attribute_count[ nnpfa_atlas_id ]; i++ ) { | |
| **nnpfa_enabled_flag**[ i ] | u(1) |
| if ( nnpfa_enabled_flag[ i ]) { | |
| **nnpfa_id**[ i ] | ue(v) |
| **nnpfa_filter_weight**[ i ] | u(6) |
| } | |
| } | |
| } | |

# FIG. 14

| nn_post_filter_activation( payloadSize ) { | Descriptor |
|---|---|
| **nnpfa_atlas_id** | u(6) |
| **nnpfa_attribute_count**[ nnpfa_atlas_id ] | u(7) |
| for( i = 0; i < nnpfa_attribute_count[ nnpfa_atlas_id ]; i++ ) { | |
| **nnpfa_enabled_flag**[ i ] | u(1) |
| if ( nnpfa_enabled_flag[ i ]) { | |
| **nnpfa_id**[ i ] | ue(v) |
| **nnpfa_qp_present_flag**[ i ] | u(1) |
| if ( nnpfa_qp_present_flag[ i ] ) { | |
| **nnpfa_qp_data_format**[ i ] | u(2) |
| if( nnpfc_qp_data_format[ i ] == 0 ) { | |
| **nnpfa_qp**[ i ] | u(6) |
| } else if( nnpfc_qp_data_format[ i ] == 1 ) { | |
| **nnpfa_qp_map_width_minus1**[ i ] | u(16) |
| **nnpfa_qp_map_height_minus1**[ i ] | u(16) |
| for ( h = 0; h < nnpfa_qp_map_height[ i ]; h++ ) { | |
| for ( w = 0; w < nnpfa_qp_map_width[ i ]; w++) { | |
| **nnpfa_qp_map**[ i ][ h ][ w ] | u(6) |
| } | |
| } | |
| } | |
| } | |
| } | |
| } | |
| } | |

# FIG. 15

Europäisches
Patentamt

European
Patent Office

Office européen
des brevets

# EUROPEAN SEARCH REPORT

Application Number

**EP 23 15 0304**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | YASUAKI TOKUMO ET AL: "[V-PCC] Neural-Network-Based Post-Processing Filter on V-PCC Attribute Frames", 138. MPEG MEETING; 20220425 – 20220429; ONLINE; (MOTION PICTURE EXPERT GROUP OR ISO/IEC JTC1/SC29/WG11), , no. m59569 25 April 2022 (2022-04-25), XP030301704, Retrieved from the Internet: URL:https://dms.mpeg.expert/doc_end_user/documents/138_OnLine/wg11/m59569-v2-m59569_NN_post_filter_on_V-PCC_r1.zip m59569_NN_post_filter_on_V-PCC_r1.docx [retrieved on 2022-04-25] * pages 1-5; figure 1 * ----- | 1-8 | INV. H04N19/597 H04N19/117 H04N19/70 G06T9/00 |
| A | MCCARTHY S ET AL: "Additional SEI messages for VSEI (Draft 2)", 27. JVET MEETING; 20220713 – 20220722; TELECONFERENCE; (THE JOINT VIDEO EXPLORATION TEAM OF ISO/IEC JTC1/SC29/WG11 AND ITU-T SG.16 ), , no. JVET-AA2006 ; m60614 19 August 2022 (2022-08-19), XP030304218, Retrieved from the Internet: URL:https://jvet-experts.org/doc_end_user/documents/27_Teleconference/wg11/JVET-AA2006-v2.zip JVET-AA2006-v2.docx [retrieved on 2022-08-19] * pages 4,5, paragraph 8.28 * * pages 16, 17, paragraph 8.29 * ----- -/-- | 1-8 | TECHNICAL FIELDS SEARCHED (IPC) H04N G06T |

The present search report has been drawn up for all claims

| Place of search | Date of completion of the search | Examiner |
|---|---|---|
| Munich | 11 August 2023 | Di Cagno, Gianluca |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches Patentamt
European Patent Office
Office européen des brevets

# EUROPEAN SEARCH REPORT

**Application Number**

EP 23 15 0304

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | "Preliminary WD for the 3rd edition of V3C", 139. MPEG MEETING; 20220718 - 20220722; ONLINE; (MOTION PICTURE EXPERT GROUP OR ISO/IEC JTC1/SC29/WG11), , no. n21720 29 July 2022 (2022-07-29), XP030303219, Retrieved from the Internet: URL:https://dms.mpeg.expert/doc_end_user/documents/139_OnLine/wg11/MDS21720_WG07_N00391.zip MDS21720_WG07_N00391/MDS21720_WG07_N00391.docx [retrieved on 2022-07-29] * pages 334, 335, paragraph 12.7.2 * ----- | 1-8 | |

TECHNICAL FIELDS SEARCHED (IPC)

The present search report has been drawn up for all claims

| Place of search | Date of completion of the search | Examiner |
|---|---|---|
| Munich | 11 August 2023 | Di Cagno, Gianluca |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)